# EUROPEAN PATENT APPLICATION

(11) **EP 2 190 045 A1**
(43) Date of publication of application: **26.05.2010**
(21) Application number: 09176304.5
(22) Date of filing: 18.11.2009
(51) Int. Cl.: H01M 2/02, H01M 2/04, H01M 2/10, H01M 10/42

(54) **Battery pack**

(30) Priority: 19.11.2008 KR 20080115301
(71) Applicant: Samsung SDI Co., Ltd., Gyeonggi-do (KR)
(72) Inventor: Kwag, Nohyun, Gyeonggi-do (KR)
(74) Representative: Gulde Hengelhaupt Ziebig & Schneider

(57) **Abstract**

A battery pack including a bare cell, a protective circuit module electrically connected to the bare cell, and a case assembly overlying the bare cell and protective circuit module, the case assembly including a cover case and a fixing member; the cover case and the fixing member of the case assembly both being integral with each other.

## Description

### BACKGROUND

### 1. Field

Embodiments relate to a battery pack.

### 2. Description of the Related Art

In a typical battery pack, a bare cell may be electrically connected to a protective circuit module. The bare cell may be produced by providing an electrode assembly and an electrolyte in a can and sealing the can. The bare cell may be electrically charged and discharged by, e.g., chemical reactions. The protective circuit module may include, e.g., a printed circuit board and electrical components mounted on the printed circuit board. The electrical components may include, e.g., integrated circuits, charge/discharge switches and passive devices. The protective circuit module may protect the bare cell from, e.g., overcharge, overdischarge and overcurrent, while controlling the bare cell. The protective circuit module may also prevent deterioration of performance of the battery pack.

Battery packs may be classified into horizontal and vertical mounting types, depending on the mounting position of the corresponding protective circuit modules. A horizontal mounting type battery pack may have a structure in which a protective circuit module is mounted on a side surface of a bare cell. In the horizontal mounting type battery pack, a fixing member may be disposed between the side surface of the bare cell and the protective circuit module to stably secure and hold the protective circuit module on the bare cell.

### SUMMARY

Embodiments are therefore directed to a battery pack, which substantially overcomes one or more of the problems due to the limitations and disadvantages of the related art.

It is therefore a feature of an embodiment to provide a battery pack having a simplified assembly procedure and reduced production costs.

At least one of the above and other features and advantages may be realized by providing a battery pack including a bare cell, a protective circuit module electrically connected to the bare cell, and a case assembly overlying the bare cell and protective circuit module, the case assembly including a cover case and a fixing member; the cover case and the fixing member of the case assembly both being integral with each other.

The fixing member may have a first side surface, a second side surface opposite to the first side surface, a third side surface and a fourth side surface, the first side surface and the second side surface may each have a first end and a second end opposite to the first end, the third side surface may connect the first ends of the first side surface and the second side surface, and the fourth side surface may connect the second ends of the first side surface and the second side surface.

The bare cell may have a short side wall having a shape, and the first side surface of the fixing member may have a shape corresponding to the shape of the short side wall of the bare cell and overlies the short side wall of the bare cell.

The second side surface of the fixing member may be substantially planar and may contact the protective circuit module.

The third and fourth side surfaces of the fixing member may be asymmetric.

The cover case may include an upper cover and first and second side covers at ends of the upper cover, the upper cover may have a first sidewall, and the third side surface of the fixing member may be connected to the first sidewall of the upper cover through a connecting portion.

The upper cover may have a second sidewall opposite to the first sidewall, at least one coupling hole may be disposed in the second sidewall, and the fourth side surface of the fixing member may have at least one coupling protrusion corresponding to the coupling hole.

Each coupling protrusion may be coupled to one of the coupling holes.

The connecting portion may continuously connect the cover case and the fixing member.

The cover case and the fixing member may be bent about the connecting portion.

The connecting portion may discontinuously connect the cover case and the fixing member.

The connecting portion may include at least one hinge hole.

The cover case and the fixing member may be bent about the connecting portion.

The cover case and the fixing member may be of one piece.

At least one of the above and other features and advantages may also be realized by providing a battery pack including a bare cell including a negative terminal on an upper surface thereof, a protective circuit module disposed on the upper surface of the bare cell and electrically connected to the bare cell, and a case assembly overlying the bare cell and protective circuit module, the case assembly including a cover case and a fixing member; the cover case and the fixing member of the case assembly both being integral with each other.

The cover case may include a connecting portion integral with and between the cover case and fixing member.

The cover case and the fixing member may be bent about the connecting portion.

The fixing member may be substantially planar and may have a terminal recess at a central portion thereof.

The negative terminal may penetrate the terminal recess.

The fixing member may be spaced apart from the bare cell.

The cover case and the fixing member may be of one piece.

### BRIEF DESCRIPTION OF THE DRAWINGS

The above and other features and advantages will become more apparent to those of ordinary skill in the art by describing in detail exemplary embodiments with reference to the attached drawings, in which:

FIG. 1A illustrates an exploded perspective view of a battery pack according to an embodiment;

FIG. 1B illustrates a partially assembled perspective view of the battery pack of FIG. 1A;

FIG. 1C illustrates an assembled perspective view of the battery pack of FIG. 1A;

FIG. 1D illustrates a partial cross-sectional view taken along line A-A of FIG. 1C;

FIGS. 2A and 2B illustrate perspective views of a case assembly of the battery pack of FIG. 1A as viewed from different directions;

FIG. 2C illustrates a pre-assembled perspective view of the case assembly of FIGS. 2A and 2B;

FIG. 3 illustrates a perspective view of a case assembly of a battery pack according to another embodiment; and

FIG. 4 illustrates an exploded perspective view of a battery pack according to yet another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Reference will now be made in detail to the embodiments, examples of which are illustrated in the accompanying drawings, wherein like reference numerals refer to like elements throughout. The embodiments are described below in order to explain the embodiments by referring to the figures.

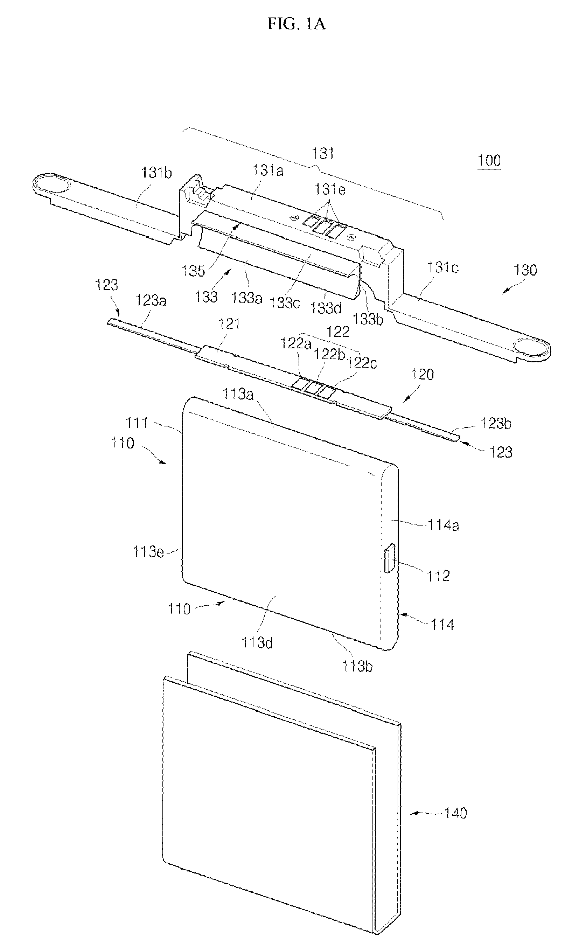

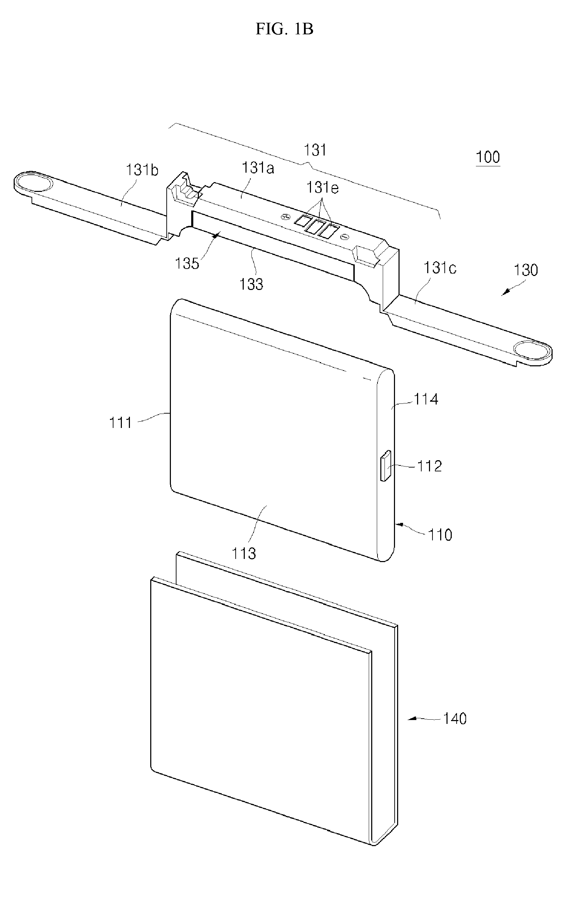

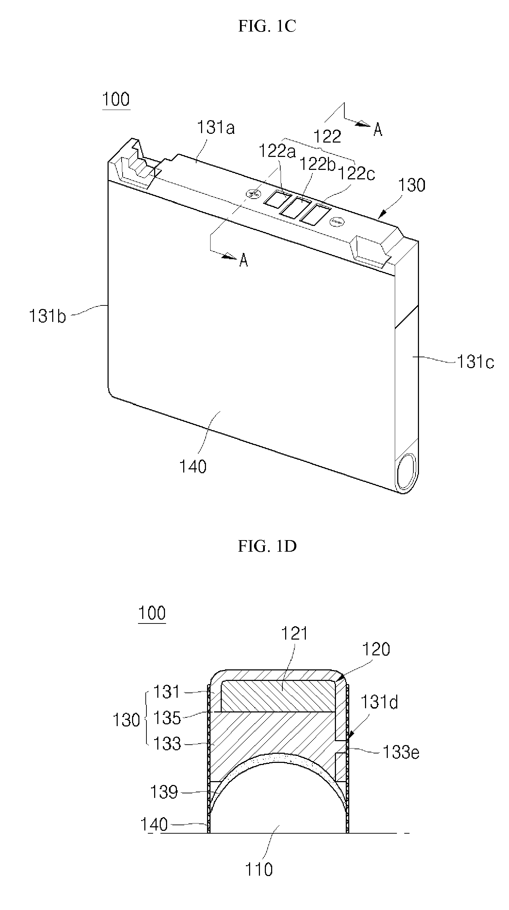

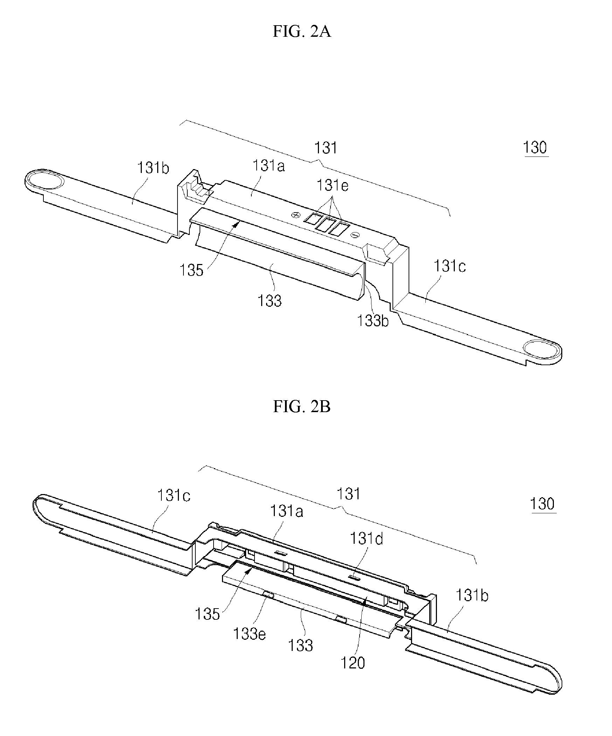

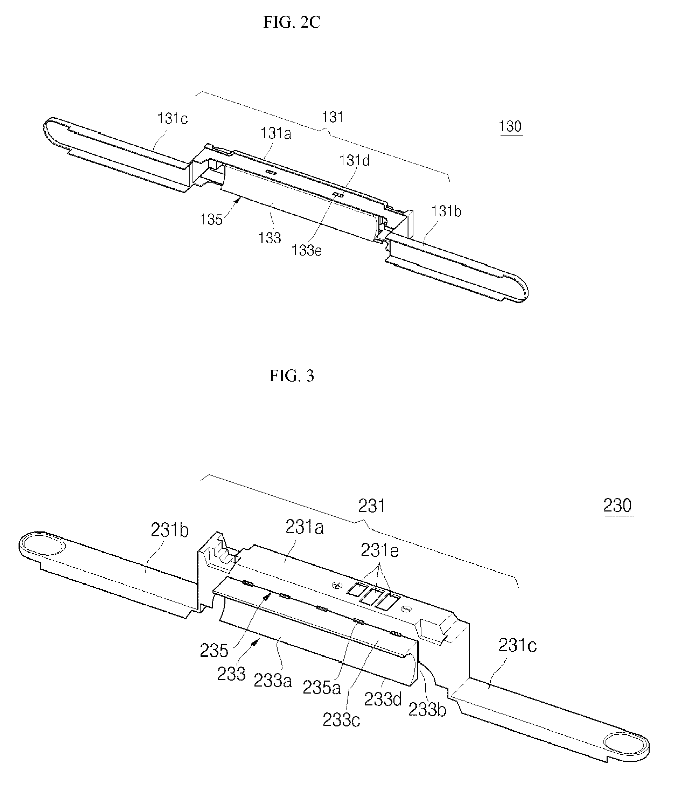

FIG. 1A illustrates an exploded perspective view of a battery pack according to an embodiment. FIG. 1B illustrates a partially assembled perspective view of the battery pack of FIG. 1A. FIG. 1C illustrates an assembled perspective view of the battery pack of FIG. 1A. FIG. 1D illustrates a partial cross-sectional view taken along line A-A of FIG. 1C. FIGS. 2A and 2B illustrate perspective views of a case assembly of the battery pack of FIG. 1A as viewed from different directions. FIG. 2C illustrates a pre-assembled perspective view of the case assembly.

Referring to FIGS. 1A through 1D and FIGS. 2A through 2C, the battery pack 100 may include a bare cell 110, a protective circuit module 120 and a case assembly 130. The battery pack 100 may further include a label 140. The case assembly 130 may include a cover case 131 and a fixing member 133, which may be integrally formed with each other. Due to this structure, the battery pack 100 may be fabricated in a simple manner at low cost.

The bare cell 110 may be a can-type battery having a positive electrode 111 and a negative terminal 112. The bare cell 110 may have a structure in which an electrode assembly (not shown) and an electrolyte (not shown) are accommodated in a metal can 113 having an open end. The can 113 may then be sealed with a cap assembly 114. The positive electrode 111 of the electrode assembly may be electrically connected to the can 113. The negative terminal 112 of the electrode assembly may be insulated from the cap assembly 114 and the can 113.

Although not shown, the electrode assembly may include a positive electrode plate, a negative electrode plate and a separator. The separator may be interposed between the positive and negative electrode plates to insulate the two electrode plates. That is, the electrode assembly may be a laminate of the positive electrode plate, the negative electrode plate and the separator. The laminate may be wound in the form of a 'jelly-roll' to obtain a structure with, e.g., high capacitance.

The can 113 for use in a prismatic secondary battery may be made of a metal and may have a substantially hexahedral shape. The can 113 may have an opening at an end thereof. The can 113 may be produced by any suitable process, e.g., deep drawing. The can 113 may have a first surface 113a in contact with the fixing member 133 and a second surface 113b opposite to the first surface 113a. Third and fourth surfaces 113c and 113d may connect to the first and second surfaces 113a and 113b to form long side walls. The can 113 may also have a fifth surface 113e to close one of two ends defined by the first, second, third and fourth surfaces 113a, 113b, 113c and 113d. The other end of the can 113 may be closed by the cap assembly 114. The can 113 may be made of a lightweight conductive metal, e.g., aluminum (A1) or aluminum alloys. The conductivity of the metallic material may allow the can 113 to serve as a terminal. The can 113 may accommodate the electrode assembly and the electrolyte.

As mentioned above, the cap assembly 114 may close the opening of the can 113. The cap assembly 114 may include a metal cap plate 114a and an insulating gasket (not shown) insulating the negative terminal 112 from the cap plate 114a. The cap plate 114a and the can 113 may be electrically connected to the positive electrode 111 of the electrode assembly. The negative terminal 112 may be electrically connected to the negative electrode of the electrode assembly. The cap assembly 114 may further include an insulating plate (not shown) under the cap plate 114a, a terminal plate (not shown) under the insulating plate and an insulating case (not shown) under the terminal plate.

The protective circuit module 120 may be electrically connected to the bare cell 110. The protective circuit module 120 may include an insulating substrate 121, charge/discharge terminals 122 and lead tabs 123. The lead tabs 123 may include a first lead tab 123a and a second lead tab 123b. A positive (+) electrode of the protective circuit module 120 may be electrically connected to the positive electrode 111 of the bare cell 110 through the first lead tab 123a. A negative (-) electrode of the protective circuit module 120 may be electrically connected to the negative terminal 112 of the bare cell 110 through the second lead tab 123b. However, polarities of the positive electrode 111 and the negative terminal 112 of the bare cell 110 may be reversed.

The insulating substrate 121 may include a polymer resin, e.g., Bakelite, or an epoxy resin. The insulating substrate 121 may have a plurality of conductive metal patterns (not shown) printed on a lower surface thereof. That is, the insulating substrate 121 may be a printed circuit board (PCB). Active devices (not shown), e.g., a charge/discharge switching device and/or a field effect transistor, may be coupled to the metal patterns. A passive device, e.g., a resistor, a capacitor and/or an inductor may also be coupled to the metal patterns. The passive devices may be electrically connected to the active devices to, e.g., set voltages and currents applied to the active devices, thus allowing the active devices to be operated in a balanced mode.

The protective circuit module 120 may further include safety means to ensure stability of the battery against dangers, e.g., explosion and fire, during charging and discharging of the bare cell 110. The protective circuit module 120 may include a safety element (not shown), e.g., a thermistor whose electrical resistance varies in response to a temperature change when the internal temperature of the bare cell 110 increases and/or a positive temperature coefficient (PTC) element to block a flow of current when the temperature of the bare cell 110 increases above a predetermined value.

The charge/discharge terminals 122 may be disposed on an upper surface of the insulating substrate 121. The charge/discharge terminals 122 may be electrically connected to the metal patterns. The charge/discharge terminals 122 may include a positive terminal 122a, an auxiliary terminal 122b and a negative terminal 122c. The charge/discharge terminals 122 may be terminals through which the bare cell 110 is electrically connected to an external system (not shown).

The first and second lead tabs 123a and 123b may be electrically connected to the positive electrode 111 and the negative terminal 112 of the bare cell 110, respectively. For the electrical connection, central portions of the first and second lead tabs 123a and 123b may be bent. The lead tabs 123 may electrically connect the bare cell 110 and the protective circuit module 120.

The case assembly 130 may be a, e.g., plastic, case in which the cover case 131 is separated from the fixing member 133 by a connecting portion 135. The cover case 131 may be integrated with the fixing member 133 through the connecting portion 135. The case assembly 130 may be made in one piece by, e.g., injection molding, of a resin, e.g., polycarbonate. A typical cover case and fixing member are individually made in different molds and assembled to each other to constitute a pack. According to the embodiments, only one mold may be needed to produce the case assembly 130 including the integrally formed cover case 131 and fixing member 133. The use of one mold beneficially simplifies the fabrication procedure of the battery pack 100 and advantageously reduces the fabrication cost of the battery pack 100. The case assembly 130 may i) bring the bare cell 110 into close contact with the protective circuit module 120, ii) protect the protective circuit module 120 from, e.g., external impacts, and iii) prevent shorts between the bare cell 110 and the protective circuit module 120.

The cover case 131 may be connected to the fixing member 133 through the connecting portion 135. The cover case 131 may include an upper cover 131a, a first side cover 131b and a second side cover 131c. The cover case 131 may include one or more coupling holes 131d into which one or more coupling protrusions 133e of the fixing member 133 may be fitted. The cover case 131 may include charge/discharge terminal holes 131e through which the charge/discharge terminals 122 are exposed to the outside. The upper cover 131a may surround an upper portion of the protective circuit module 120. The charge/discharge terminal holes 131e may penetrate the upper cover 131a. The charge/discharge terminals 122 on the upper surface of the protective circuit module 120 may be exposed to the outside through the charge/discharge terminal holes 131e. The first and second side covers 131b and 131c may be connected to ends of the upper cover 131a and may cover surfaces of the bare cell 110 on which the first and second lead tabs 123a and 123b are positioned. The first and second side covers 131b and 131c may prevent contact and shorts between the, e.g., metallic, first and second lead tabs 123a and 123b and an external conductor (not shown).

The fixing member 133 may have a relatively wide first side surface 133a, a second side surface 133b opposite to the first side surface, a relatively narrow third side surface 133c and a fourth side surface 133d opposite to the third side surface. The first and second side surfaces 133a and 133b may overlie the first surface 113a of the can 113 and contact a lower surface of the protective circuit module 120, respectively. The third side surface 133c may be connected to the connecting portion 135, and the fourth side surface 133d may include the coupling protrusions 133e. The third and fourth side surfaces 133c and 133d may be asymmetric. That is, the distance between opposite ends of the first and second side surfaces 133a and 133b at the third side surface 133c may be different from the distance between other opposite ends of the first and second side surfaces 133a and 133b at the fourth side surface 133d. This is because opposite long side walls of the cover case 131 may be structurally asymmetric. After pre-assembly of the case assembly 130, the third and fourth side surfaces 133c and 133d may be in a horizontal position due to their asymmetry. The fixing member 133 may secure and hold the protective circuit module 120 between the second side surface 133b and the upper cover 131a.

The fixing member 133 may be connected to the cover case 131 through the connecting portion 135. The connecting portion 135 may be defined as an area in which the third side surface 133c of the fixing member 133 is continuously connected to a long side wall of the upper cover 131a without interruption.

The first side surface 133a of the fixing member 133 may overlie a long side wall of the bare cell 110. More specifically, the first side surface 133a of the fixing member 133 may overlie the first surface 113a of the can 113. There is no restriction on the shapes of the first side surface 133a of the fixing member 133 and the first surface 113a of the can 113. The first side surface 133a of the fixing member 133 may be rounded in a concave manner and the first surface 113a of the can 113 may be rounded in a convex manner, see Fig. 1a and Fig. 1d. Alternatively, the first surface 113a of the can 113 and the first side surface 133a of the fixing member 133 may be substantially planar. The second side surface 133b of the fixing member 133 is preferably substantially planar so as to be in close contact with the lower surface of the protective circuit module 120. The coupling protrusions 133e of the fixing member 133 may be disposed on the fourth side surface 133d of the fixing member 133. The coupling protrusions 133e may be disposed at positions corresponding to the coupling holes 131d in the upper cover 131a. Upon assembly, the coupling protrusions 133e may be press-fitted into the coupling holes 131d in a one-to-one relationship.

A more detailed explanation of the coupling of the cover case 131 to the fixing member 133, which may be integrally formed with one another, will be provided hereinafter. First, the protective circuit module 120 may be inserted within the upper cover 131a of the case assembly 130. Then, the charge/discharge terminals 122 of the protective circuit module 120 may be correctly positioned such that the charge/discharge terminals 122 are exposed to the outside through the respective charge/discharge terminal holes 131e. Next, the fixing member 133 may be bent about the connecting portion 135, in which a long side wall of the upper cover 131a and the third side surface 133c of the fixing member 133 meet each other, toward the other long side wall of the upper cover 131a. Then, the coupling protrusions 133e on the fourth side surface 133d of the fixing member 133 may be press-fitted into the coupling holes 131d in the other long side of the upper cover 131a to complete pre-assembly of the case assembly 130. Thereafter, the case assembly 130 may be coupled to the bare cell 110. As described above, the protective circuit module 120 may be mounted within the case assembly 130 before the case assembly 130 is coupled to the bare cell 110, leading to a further improvement in operational efficiency.

An adhesive portion 139 may be disposed between the bare cell 110 and the fixing member 133 to enhance adhesion and bonding of the bare cell 110 to the fixing member 133. Due to the case assembly 130 including the integrally formed cover case 131 and fixing member 133, the overall fabrication procedure of the battery pack 100 may be effectively simplified. In addition, pre-assembly of the protective circuit module 120 and the case assembly 130 may prevent errors during assembly of the bare cell 110, enabling efficient fabrication of the battery pack 100.

Finally, the label 140 may surround the bare cell 110. The label 140 may be adhered to the bare cell 110 and the case assembly 130 by means of an adhesive. Information, e.g., capacity and product number, about the battery pack 100 may be printed on an outer surface of the label 140.

As described above, the case assembly 130 of the battery pack 100 may include the integrally formed cover case 131 and fixing member 133. That is, the case assembly 130 may be made using one mold. Accordingly, the overall fabrication procedure of the battery pack 100 may be simplified, thus achieving improved productivity and efficiency. In addition, the battery pack 100 may be fabricated without the use of an additional mold for producing the fixing member 133, resulting in a reduction in the fabrication cost of the battery pack 100.

Hereinafter, an explanation will be given of a battery pack according to another embodiment. FIG. 3 illustrates a perspective view of a case assembly 230 of the battery pack. The battery pack according to the present embodiment may have the same constituent elements as the battery pack 100 according to the previous embodiment except for the structure of the connecting portion, and repeated explanation of the same elements is omitted. Only differences between the embodiments will be explained below.

According to the present embodiment, the battery pack may include a bare cell 110, a protective circuit module 120 and a case assembly 230. Referring to FIG. 3, the case assembly 230 may include a cover case 231 and a fixing member 233, which may be integrated with each other through a connecting portion 235. In other words, the cover case 231, fixing member 233 and connecting portion 235 may be integrally formed. The case assembly 230 may be made of the same material by the same process and may perform the same role as the case assembly 130. The case assembly 230 may be a, e.g., plastic, case in which a cover case 231 is separated from the fixing member 233 by the connecting portion 235.

The cover case 231 may be connected to the fixing member 233 through the connecting portion 235. The cover case 231 may include an upper cover 231a, a first side cover 231b and a second side cover 231c. The cover case 231 may include charge/discharge terminal holes 231e through which the charge/discharge terminals 122 of the protective circuit module 120 are exposed to the outside.

The fixing member 233 may have a relatively wide first side surface 233a, a second side surface 233b opposite to the first side surface 233a, a relatively narrow third side surface 233c and a fourth side surface 233d opposite to the third side surface 233c. The first and second side surfaces 233a and 233b may overlie the first surface 113a of the can 113 and contact the protective circuit module 120, respectively. The third side surface 233c may be connected to the connecting portion 235. The fourth side surface 233d may include one or more coupling protrusions (not shown), which may be press-fitted into one or more coupling holes (not shown) disposed on the upper cover 231a at positions corresponding to the coupling protrusions. The connecting portion 235 may include one or more hinge holes 235a. The connecting portion 235 may extend discontinuously between the fixing member 233 and cover case 231 due to the hinge holes 235a. The hinge holes 235a may allow the cover case 231 and the fixing member 235 to more easily bend about the connecting portion 235 when the protective circuit module 120 is mounted within the case assembly 230 (i.e. during pre-assembly). That is, the hinge holes 235a may enhance the flexibility of the connecting portion 235. The number of the hinge holes 235a is not limited. It is preferred that two or more hinge holes 235a are arranged at regular intervals. As demonstrated above, the hinge holes 235a of the connecting portion 235 may further improve workability during the pre-assembly process for mounting the protective circuit module 120 within the case assembly 230.

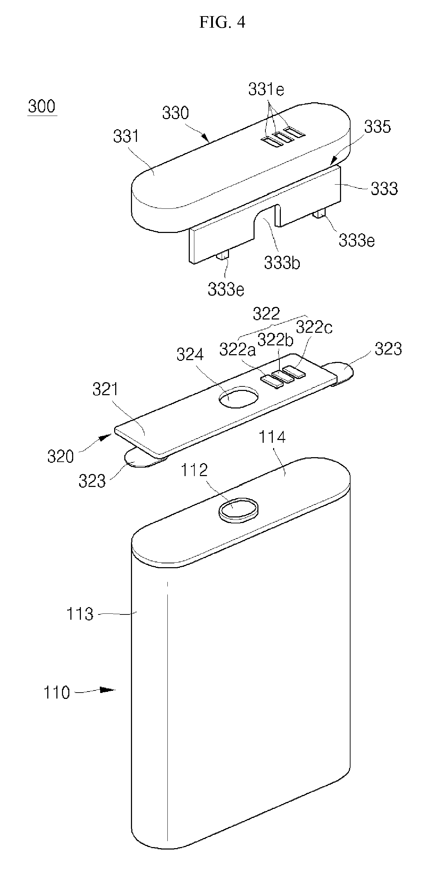

A battery pack 300 according to yet another embodiment will be explained below. FIG. 4 illustrates an exploded perspective view of the battery pack 300. The battery pack 300 may be a vertical mounting type, and may have the same constituent elements having the same functions and effects as the horizontal mounting type battery pack 100 described above, except for slight differences in the position and structure of the elements. Accordingly, the same reference numerals are given to the same components as the components of the previous embodiment; and repeated descriptions thereof are omitted. Only differences between the embodiments will be explained below.

Referring to FIG. 4, the vertical mounting type battery pack 300 may include a bare cell 110, a protective circuit module 320 and a case assembly 330. The protective circuit module 320 may include an insulating substrate 321, charge/discharge terminals 322 and lead tabs 323. The charge/discharge terminals 322 may include a positive terminal 322a, an auxiliary terminal 322b and a negative terminal 322c. The protective circuit module 320 may further include a welding hole 324. The welding hole 324 may provide a passage for, e.g., resistance welding. Specifically, a resistance welding rod may be inserted through the welding hole 324 and may be used to weld a negative terminal 112 of the underlying bare cell 110 to a conductive plate (not shown) electrically connected to a secondary protective device (not shown). A positive electrode of the bare cell 110 may be connected to a positive (+) electrode of the protective circuit module 320 through one of the lead tabs 323 of the protective circuit module 320. The protective circuit module 320 may be made of the same material by the same process and may perform the same role as the protective circuit module 120, except for a slight difference in its position.

The case assembly 330 may include a cover case 331, a fixing member 333 and a connecting portion 335. The case assembly 330 may be constructed of, e.g., plastic, in which the cover case 331 is separated from the fixing member 333 by the connecting portion 335. The cover case 331 may be integrated with the fixing member 333 through the connecting portion 335. The case assembly 330 may be made of the same material by the same process and may perform the same role as the case assembly 130.

The cover case 331 may be connected to the fixing member 333 through the connecting portion 335. The cover case 331 may include charge/discharge terminal holes 331e through which the charge/discharge terminals 322 of the protective circuit module 320 are exposed to the outside. The cover case 331 may include one or more coupling holes (now shown) into which one or more coupling protrusions 333e of the fixing member 333 may be fitted.

The fixing member 333 may secure and hold the protective circuit module 320 in the case assembly 330. The connecting portion 335 may be continuously connected to the fixing member 333, in a similar fashion as the connecting portion 135 described above. Alternatively, the connecting portion 335 may be discontinuously connected to the fixing member 333, in a similar fashion as the connecting portion 235 described above.

The battery pack 300 may have a structure in which the protective circuit module 320 overlies the negative terminal 112 of the bare cell 110. Due to this structure, the fixing member 333 may have a terminal recess 333b corresponding to the welding hole 324 of the protective circuit module 320 at a central portion thereof so that the negative terminal 112 of the bare cell 110 penetrates the terminal recess 333b. In a typical vertical mounting type battery pack, an insulating tape may be attached to an upper surface of a bare cell to prevent shorts between a protective circuit module and the bare cell. This step of applying the insulating tape may require additional labor and processing. In contrast, according to the present embodiment, the case assembly 330, including the integrally formed cover case 331 and fixing member 333, may enable pre-assembly of the protective circuit module 320, thus eliminating the need for additional processing steps. It is preferred that the thickness of the fixing member 333 is smaller than that of the lead tabs 323, thus allowing the bare cell 110 to be spaced apart from the protective circuit module 320. The fixing member 333 may be planar and may have one or more coupling protrusions 333e on a sidewall thereof and opposite to the connecting portion 335. Upon pre-assembly of the case assembly 330, the coupling protrusions 333e may be press-fitted into coupling holes (not shown) of the cover case 331.

Hereinafter, the assembly procedure of the battery pack 300 will be briefly explained. First, after the protective circuit module 320 is correctly positioned on the bare cell 110, the lead tabs 323 may be coupled to the bare cell by, e.g., laser welding. The negative terminal 112 may be coupled to the protective circuit module 320 by, e.g., resistance welding. Next, the fixing member 333 of the case assembly 330 may be laterally inserted into a space defined by the bare cell 110 and the protective circuit module 320. The negative terminal 112 may be disposed within the terminal recess 333b of the fixing member 333. Next, the cover case 331 of the case assembly 330 may be coupled to the fixing member 333 to complete the fabrication of the battery pack 300.

As described above, the case assembly 330 may include the integrally formed cover case 331 and the fixing member 333. The case assembly 330 of the battery pack 300 may not be pre-assembled, unlike the case assembly 130 of the battery pack 100 described above. However, the fabrication procedure of the battery pack 300 may be simplified in a manner similar to that of the battery pack 100, leading to an overall improvement in productivity and efficiency.

As is apparent from the above description, the battery packs of the embodiments may include a case assembly including an integrally formed cover case and fixing member. Since the case assembly may be made using one mold, the fabrication procedure of the battery packs may be simplified. This may lead to an improvement in productivity and efficiency. In addition, the battery packs of the embodiments may be fabricated at low cost.

A typical fixing member may be individually produced using an additional mold, which may increase production costs, eventually resulting in an increase in the overall fabrication cost of a battery pack. The use of the typical fixing member in the fabrication of the battery pack may involve additional steps, e.g., alignment of the fixing member in a correct position between the bare cell and the protective circuit module and coupling the fixing member to the bare cell and the protective circuit module. These additional steps may complicate the fabrication procedure of a battery pack, thereby lowering productivity and efficiency.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A battery pack (100, 300), comprising:
a bare cell (110);
a protective circuit module (120, 320) electrically connected to the bare cell (110); and
a case assembly (130, 330) overlying the bare cell (110) and protective circuit module (120),
**characterized in that**
the case assembly (130, 330) includes:
a cover case (131, 331) and a fixing member (133, 333); the cover case (131, 331) and the fixing member (133, 333) of the case assembly (130, 330) both being integral with each other.

2. The battery pack (100) as claimed in claim 1, wherein:
the fixing member (133) has a first side surface (133a), a second side surface (133b) opposite to the first side surface (133a), a third side surface (133c) and a fourth side surface (133d),
the first side surface (133a) and the second side (133b) surface each have a first end and a second end opposite to the first end,
the third side surface (133c) connects the first ends of the first side surface (133a) and the second side surface (133b), and
the fourth side surface (133d) connects the second ends of the first side surface (133a) and the second side surface (133b).

3. The battery pack (100) as claimed in claim 2, wherein:
the bare cell (110) has a short side wall having a shape, and
the first side surface (133a) of the fixing member (133) has a shape corresponding to the shape of the short side wall of the bare cell (110) and overlies the short side wall of the bare cell (110).

4. The battery pack (100) as claimed in claim 2, wherein the second side surface (133b) of the fixing member (133) is substantially planar and contacts the protective circuit module (120).

5. The battery pack (100) as claimed in claim 2, wherein the third and fourth side surfaces (133c, 133d) of the fixing member (131) are asymmetric.

6. The battery pack (100) as claimed in claim 2, wherein:
the cover case (110) includes an upper cover (131a) and first and second side covers (131b, 131c) at ends of the upper cover (131a),
the upper cover (131a) has a first sidewall, and
the third side surface (133c) of the fixing member (133) is connected to the first sidewall of the upper cover (131a) through a connecting portion (135).

7. The battery pack (100) as claimed in claim 6, wherein:
the upper cover (131 a) has a second sidewall opposite to the first sidewall,
at least one coupling hole (131d) is disposed in the second sidewall, and
the fourth side surface (133d) of the fixing member (133) has at least one coupling protrusion (133e) corresponding in location and/or coupled to the coupling hole (131d).

8. The battery pack (100) as claimed in claim 6, wherein the connecting portion (135) continuously connects the cover case (131) and the fixing member (133).

9. The battery pack (100) as claimed in claim 6, wherein the connecting portion (135) discontinuously connects the cover case (131) and the fixing member (135), and/orwherein the connecting portion (135) includes at least one hinge hole (235a).

10. The battery pack (300) of claim 1, wherein
the bare cell (110) includes a negative terminal (112) on an upper surface thereof; and
the protective circuit module (320) is disposed on the upper surface of the bare cell (110) and electrically connected to the bare cell (110).

11. The battery pack (300) as claimed in claim 10, wherein the cover case (331) includes a connecting portion (335) integral with and between the cover case (331) and fixing member (333).

12. The battery pack (300) as claimed in claim 10 or 11, wherein the fixing member (333) is substantially planar and has a terminal recess (324) at a central portion thereof.

13. The battery pack (300) as claimed in claim 12, wherein the negative terminal (112) penetrates the terminal recess (324).

14. The battery pack (300) as claimed in one of the previous claims10 to 13, wherein the fixing member (333) is spaced apart from the bare cell (110).

15. The battery pack (100, 300) as claimed in one of the previous claims, wherein the cover case (131, 331) and the fixing member (133, 333):
are bent about a connecting portion (135, 335) connecting the cover case (131, 331) and the fixing member (133, 333); and/or
are of one piece.
